(19) Europäisches Patentamt
European Patent Office
Office européen des brevets

(11) Numéro de publication : **0 004 826**
**B1**

(12) # FASCICULE DE BREVET EUROPÉEN

(45) Date de publication du fascicule du brevet : **11.11.81**

(51) Int. Cl.³ : **C 08 L 27/06**, C 08 K 5/09, C 08 K 5/38

(21) Numéro de dépôt : **79420017.0**

(22) Date de dépôt : **29.03.79**

(54) **Compositions stabilisées à base de chlorure de polyvinyle et produits conformés obtenus à partir de ces compositions.**

(30) Priorité : **04.04.78 FR 7810840**

(43) Date de publication de la demande : **17.10.79 (Bulletin 79/21)**

(45) Mention de la délivrance du brevet : **11.11.81 Bulletin 81/45**

(84) Etats contractants désignés : **BE DE FR GB NL SE**

(56) Documents cités : **US - A - 3 346 536**

(73) Titulaire : **RHONE-POULENC INDUSTRIES**
**22, avenue Montaigne**
**F-75008 Paris (FR)**

(72) Inventeur : **Gay, Michel**
**11, rue Garibaldi**
**F-69006 Lyon (FR)**

(74) Mandataire : **Perret, Michel et al**
**RHONE-POULENC INDUSTRIES Centre de Recherches des Carrières Service Brevets**
**F-69190 Saint-Fons (FR)**

**EP 0 004 826 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

Compositions stabilisées à base de chlorure de polyvinyle et produits conformés obtenus à partir de ces compositions

La présente invention concerne des compositions stabilisées à base de chlorure de polyvinyle.

On sait que le chlorure de polyvinyle, qui est une matière première de base de l'industrie de transformation des matières plastiques, doit être mis en œuvre à une température de l'ordre de 150 à 180 °C. A cette température, le chlorure de polyvinyle subit une dégradation importante contre laquelle on le protège par l'emploi de stabilisants. De très nombreuses substances ont déjà été proposées, notamment les sels organiques de calcium, de plomb, de cadmium ou de baryum, ainsi que les chélates métalliques de dérivés de composés 1,3-dicarbonyle capables de tautomérie céto-énolique. On obtient de bons résultats en utilisant conjointement des sels organiques métalliques et des composés organiques dicétoniques : FR 2 297 227.

Cependant, afin de rendre les résines plus facilement manipulables et d'augmenter ainsi la cadence de production d'objets divers en chlorure de polyvinyle, on cherche à mettre en œuvre les résines à des températures aussi élevées que possible. Jusqu'à présent, même avec les meilleurs stabilisants il en résulte des inconvénients dont le principal est l'apparition du jaunissement, au bout d'un certain temps. Cette coloration jaune est inacceptable pour certaines applications comme la préparation d'objets à paroi mince transparente. C'est pourquoi on continue de rechercher des stabilisants ou des mélanges de stabilisants qui permettent, tout en évitant le jaunissement, de manipuler le chlorure de polyvinyle à des températures aussi élevées que possible en particulier entre 180 et 230° pendant des durées les plus longues possible.

Il a maintenant été trouvé des compositions à base de polymère de chlorure de vinyle stabilisées thermiquement par emploi d'un ou plusieurs sels organiques de calcium, du baryum, du zinc, du cadmium ou du magnésium, éventuellement d'un polyol linéaire ayant au moins quatre fonctions hydroxyles dont au moins une est une fonction alcool primaire, éventuellement d'un composé époxydé comme par exemple l'huile de soja époxydée, caractérisée en ce qu'elles contiennent un ou plusieurs composés organiques de formule générale :

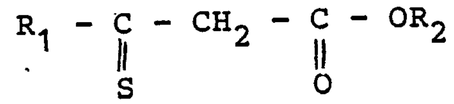

dans laquelle $R_1$ représente un radical alcoyle ayant de 1 à 36 atomes de carbone ou un radical aryle, dans laquelle $R_2$ représente un radical alcoyle ou alcényle ayant de 1 à 36 atomes de carbone ou un radical aryle, ces radicaux pouvant être substitués par 1 ou plusieurs atomes d'halogène ou des radicaux alkyles ou des groupements hydroxyles, éthéroxydes, alkoxycarbonyles ou des groupements de formule

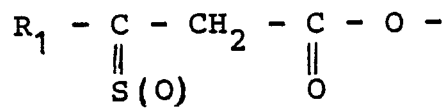

ou des groupements azotés.

Par composition à base de chlorure de polyvinyle, on entend des compositions contenant un homopolymère ou un copolymère de chlorure de vinyle et divers adjuvants couramment utilisés pour faciliter la mise en œuvre ou pour apporter des propriétés particulières à l'objet façonné.

Tout type d'homopolymère de chlorure de vinyle peut convenir quel que soit son mode de préparation : polymérisation en masse, en suspension, en dispersion ou de tout autre type, et quelle que soit sa viscosité intrinsèque.

De nombreux copolymères de chlorure de vinyle peuvent également être stabilisés contre les effets de la chaleur par des moyens identiques à ceux utilisés pour les homopolymères. Ils comprennent par exemple des copolymères obtenus par copolymérisation du chlorure de vinyle avec d'autres monomères présentant une liaison éthylénique polymérisable, par exemple l'éthylène, les esters acryliques, le styrène, les esters vinyliques.

Les copolymères contiennent habituellement au moins 50 % en poids de chlorure de vinyle. Toutefois le procédé selon l'invention s'applique particulièrement bien aux copolymères contenant au moins 80 % en poids de chlorure de vinyle et dont l'autre monomère est l'acétate de vinyle, le chlorure de vinylidène.

Les homopolymères ou copolymères peuvent être soit « rigides », soit « flexibles ». Lorsqu'on utilise des polymères « rigides », ceux-ci peuvent comprendre des modificateurs de résistance au choc, des pigments et/ou charges, des lubrifiants, etc... en sus de la résine et des stabilisants. Lorsqu'on utilise des polymères « flexibles » ceux-ci peuvent comprendre un plastifiant (primaire et secondaire), des pigments et/ou charges des lubrifiants, etc... en sus de la résine et des stabilisants.

Des lubrifiants, des antioxydants, des stabilisants « lumière » ou UV peuvent aussi être ajoutés dans

les compositions.

Les stabilisants constitués de sels organiques de métaux utilisés dans les formulations selon l'invention sont essentiellement des sels de calcium, baryum, zinc, magnésium ou cadmium d'acides organiques aliphatiques ou d'acides gras, saturés ou non, substitués ou non ou d'acides aromatiques. Parmi les sels couramment utilisés on peut citer les acétates, les diacétates, les stéarates, les oléates, les laurates, les palmitates, les benzoates, les hydroxystéarates, les éthyl-2 hexanoates.

On les emploie habituellement sous forme de couples tels que calcium/zinc ou baryum/zinc, dans des proportions comprises entre 0,1 et 5 % en poids par rapport au polymère.

Les stabilisants organiques utilisés en conjonction avec les stabilisants métalliques ci-dessus sont préparés habituellement par des procédés classiques de synthèse, par exemple à partir des β cétoesters correspondants par action de l'hydrogène sulfuré en milieu alcoolique saturé par l'acide chlorhydrique sec.

Dans le cadre d'une réaction générale suivante :

dicétène + alcool ou phénol → β cétoester

β cétoester + hydrogène sulfuré → β thiocétoester

un grand nombre de produits peuvent être obtenus qui conviennent pour la mise en œuvre de l'invention et dont nous citerons quelques familles ou quelques produits :

1) Produits dérivés d'alcools légers ou lourds.

On obtient alors des β thiocétoesters de formule

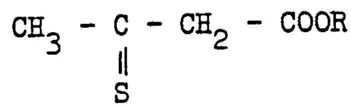

R étant un radical alcoyl linéaire saturé ayant de 1 à 36 atomes de carbone.

2) Produits dérivés de diols ou de polyols substitués ou non. Nous citerons quelques exemples de β thiocétoesters pouvant avoir 1 ou 2 fonctions thione obtenus à partir de :

sorbitol

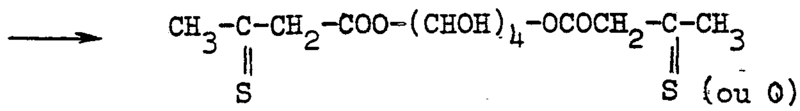

pentaérythrite

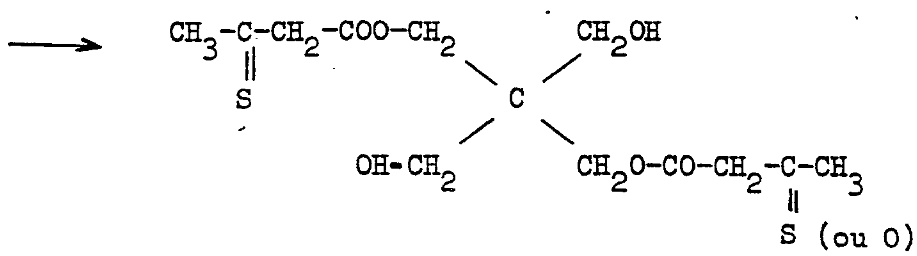

triméthylol propane

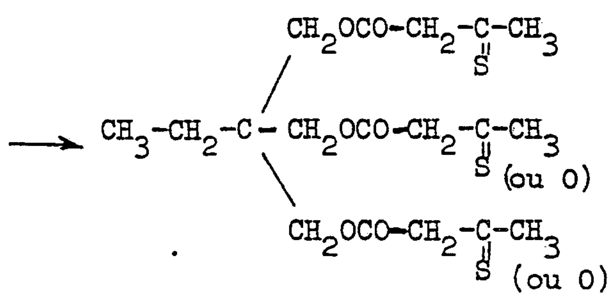

bisphénol A hydrogéné

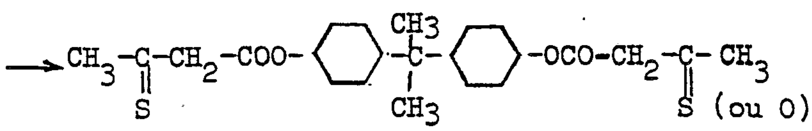

2,2-bis[p(hydroxy-2 éthoxy)phényl] propane

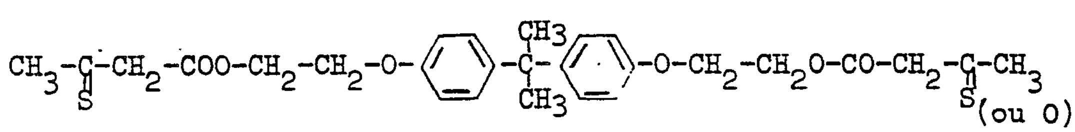

butène-2 diol-1,4 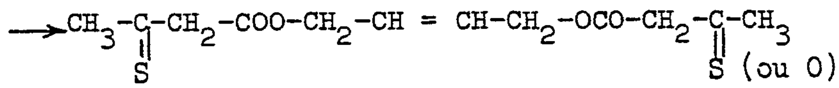

glycol ou diol 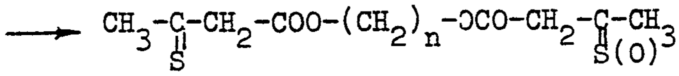

n étant le plus souvent compris entre 1 et 6

glycérol 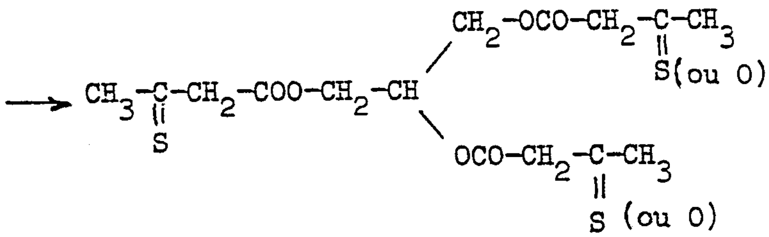

monostéarate de glycérol 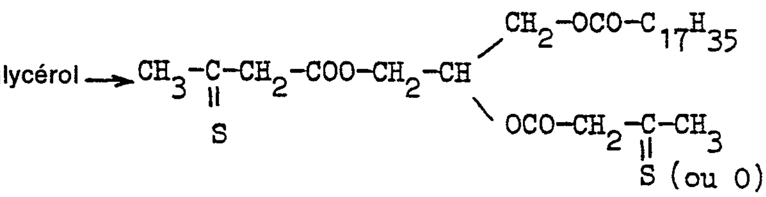

3) Produits dérivés d'alcools benzyliques, comme par exemple :

l'alcool benzylique 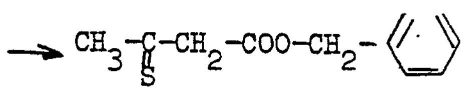

l'alcool anisique 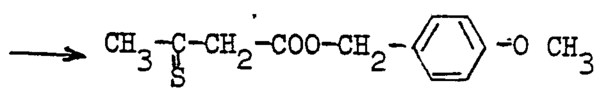

4) Produits dérivés de phénols ou de polyphénols comme par exemple :

le nonylphénol 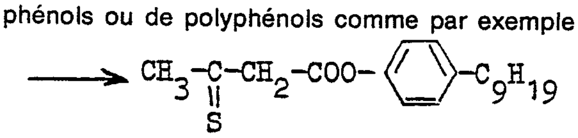

le bisphénol A 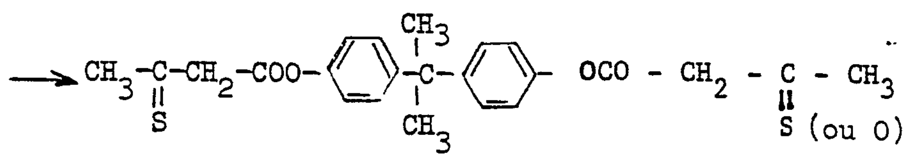

l'hydroquinone 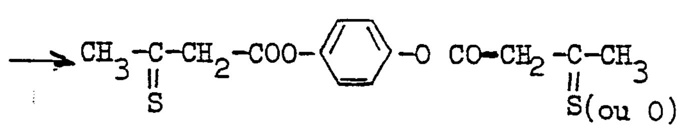

un salycilate d'alcoyle 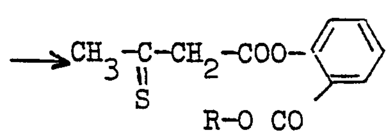

5) Produits dérivés d'alcools divers

lactate de butyle 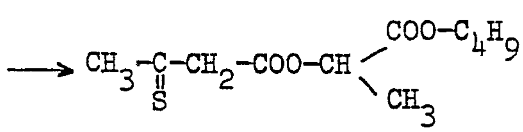

tartrate de butyle 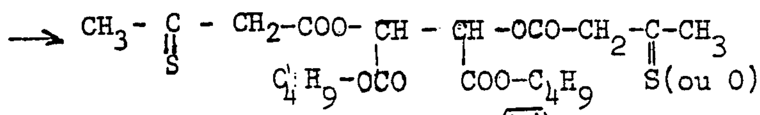

phénoxy-2 éthanol 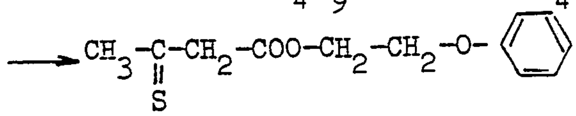

thiohydroxyéthylisocyanurate

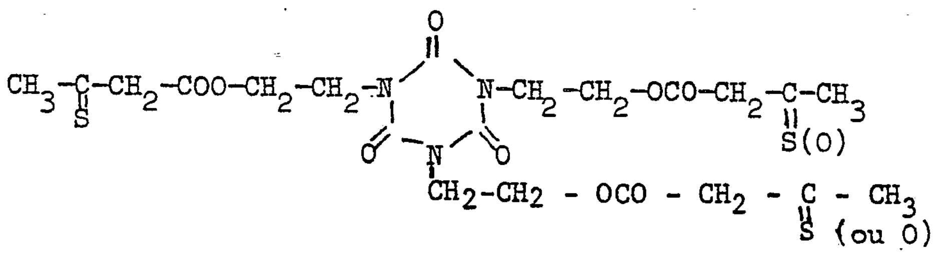

Certaines synthèses plus spécifiques sont décrites par S.K. MITRA dans « Journal of the Indian Chemical Society » 10 (1933) p. 37 ou 15 (1938) p. 31 ou par Z. REYES et R.M. SILVERSTEIN dans « Journal of American Chemical Society » 80 (1958) p. 6 372.

Ces composés organiques sont utilisés dans des proportions comprises entre 0,005 et 5 %, de préférence entre 0,1 et 1 %, en poids par rapport au poids de polymère.

Il est également possible d'ajouter aux stabilisants selon l'invention d'autres composés organiques connus pour leur action stabilisante tels que par exemple les alcoyl ou aryl phosphites et/ou les dérivés époxydes comme par exemple les huiles de soja époxydées.

Les stabilisants selon l'invention peuvent être incorporés en même temps que les autres adjuvants. Ils peuvent aussi être mélangés entre eux, seuls, ou avec certains des adjuvants ; ils constituent alors une composition stabilisante qui sera ultérieurement incorporée au chlorure de polyvinyle. Toutes les méthodes usuelles connues dans ce domaine peuvent convenir pour réaliser le mélange des ingrédients. Toutefois, l'homogénéisation de la composition peut avantageusement être faite sur malaxeur.

Les compositions selon l'invention peuvent être mises en œuvre selon toutes les techniques habituellement utilisées pour travailler les compositions de PVC ou de ses copolymères, par exemple : injection, extrusion, extrusion soufflage, calandrage, moulage par rotation, etc...

L'association d'un stabilisant organique et de couples stabilisants métalliques permet de retarder considérablement l'apparition du jaunissement pendant la période où la composition est chauffée à 180 °C et plus, et d'obtenir des produits finis transparents, homogènes et ne présentant pas d'exsudation.

Les exemples ci-après illustrent l'invention :

## Exemples 1 à 5

On prépare une composition A pouvant être notamment utilisée pour l'extrusion soufflage de bouteilles et qui servira de témoin.

On place dans un broyeur à bille :

— 1 000 g d'un PVC en poudre, caractérisé par un indice de viscosité égal à 80 (norme NF T 51 013), obtenu par polymérisation en suspension et vendu sous la marque déposée LUCOVYL RS 8 000.

— 100 g d'un agent renforçateur de choc qui est un copolymère de butadiène, de styrène et de méthacrylate de méthyle.

— 10 g d'un lubrifiant qui est une cire à base d'ester de colophane et qui est commercialisée sous la marque déposée WAX E.

— 5 g de stéarate de calcium.

— 2,5 g de stéarate de zinc.

— 30 g d'huile de soja époxydée.

On laisse tourner sur rouleaux pendant 15 heures.

Dans 5 poudriers de 250 $cm^3$, contenant quelques billes de porcelaine, on charge 100 g de cette composition A et respectivement :

— 0,3 g de benzoylacétate d'éthyle (composition B)

— { 0,3 g de benzoylacétate d'éthyle (composition C)
  0,3 g de sorbitol

— 0,3 g de thiobenzoylacétate d'éthyle (composition D)

— { 0,3 g de thiobenzoylacétate d'éthyle (composition E)
  0,3 g de sorbitol.

On laisse tourner sur rouleaux pendant 15 heures et on obtient des compositions homogènes.

A partir de la composition témoin sans stabilisant organique (A) et des compositions (B, C, D, E) on prépare au moyen d'une calandre chauffée à 180 °C des plaques de 2,5 mm d'épaisseur.

On découpe dans ces plaques des éprouvettes rectangulaires de 10 × 20 mm que l'on place dans une étuve ventilée à 175 °C pendant des durées variables.

On détermine ensuite la coloration des échantillons selon l'échelle Gardner, à l'aide d'un disque Lovibond.

On obtient les résultats suivants :

| | Temps en minutes | | | | | | | Temps de claquage correspondant au noircissement total |
|---|---|---|---|---|---|---|---|---|
| | 0 | 7 | 14 | 21 | 28 | 35 | 42 | |
| Composition témoin A | 6 | 7 | 8 | 8 | 8 | 9 | 9 | 95 mn |
| Composition témoin B | 2 | 3 | 3 | 4 | 4 | 5 | 5 | 97 |
| Composition témoin C | 2 | 4 | 5 | 5 | 7 | 8 | 8 | 150 |
| Composition témoin D | 0 | 0 | 0 | 2 | 3 | 3 | 6 | 93 |
| Composition témoin E | 0 | 0,5 | 1 | 2 | 2 | 2 | 4 | 150 |

On constate que l'emploi d'un composé β thiocétoester permet d'améliorer considérablement la stabilisation chaleur par rapport à un témoin sans ce composé et par rapport à un témoin (B) comportant un β cétoester correspondant.

Par ailleurs, on constate que l'emploi conjoint d'un polyol qui a un effet négatif sur la coloration initiale mais positif sur la stabilité à long terme permet un meilleur compromis avec les β thiocétoesters plutôt qu'avec les β cétoesters correspondants.

Exemples 6 à 10

On opère comme indiqué à l'exemple 1 avec la composition suivante (F) :
même polymère 1 000 g
même renforçateur de choc 100 g
même lubrifiant 10 g
même huile de soja époxydée 30 g
stéarate de calcium 4 g
stéarate de zinc 2 g
dans laquelle on ajoute :
0,3 g de thioacétylacétate d'éthyle (composition G)
0,3 g de thiobenzoylacétate d'éthyle (composition H)
0,5 g de thioacétylacétate de cétyle (composition I)
0,5 g de thiobenzoylacétate de cétyle (composition J)

On prépare des échantillons comme à l'exemple 1 et on fait subir un traitement thermique à 180 °C.

On obtient les résultats suivants :

| | Temps en minutes | | | | | | |
|---|---|---|---|---|---|---|---|
| | 0 | 7 | 14 | 21 | 28 | 35 | 46 |
| F | 6 | 7 | 8 | 8 | 8 | 9 | 9 |
| G | 0 | 0 | 2 | 4 | 4 | 6 | 7 |
| H | 0 | 0 | 2 | 4 | 4 | 6 | 7 |
| I | 0 | 0 | 2 | 4 | 5 | 6 | 8 |
| J | 0 | 0 | 2,5 | 4 | 5 | 6 | 7 |

On constate que les résultats sont à peu près équivalents avec les quatre produits essayés.

Exemples 11 à 15

Ces essais montrent l'intérêt du sorbitol en association avec les β thiocétoesters pour prolonger la stabilisation.

On opère comme indiqué à l'exemple 1 avec la composition suivante (K)
même polymère 1 000 g
même renforçateur de choc 100 g
même lubrifiant 10 g

même huile de soja époxydée 30 g
stéarate de calcium 4 g
stéarate de zinc 4 g
sorbitol 3 g

dans laquelle on ajoute :

L 0,3 g de thioacétylacétate d'éthyle
M 0,3 g de thiobenzoylacétate d'éthyle
N 0,5 g de thioacétylacétate de cétyle
O 0,5 g de thiobenzoylacétate de cétyle

On obtient aux tests décrits à l'exemple 6 les résultats suivants :

| | Temps en minutes | | | | | | | |
|---|---|---|---|---|---|---|---|---|
| | 0 | 7 | 14 | 21 | 28 | 35 | 46 | 80 |
| K | 6 | 9 | 11 | 11 | 11 | 11 | 11 | bords noirs |
| L | 0 | 0 | 1 | 5 | 6 | 6 | 6 | bords noirs |
| M | 0 | 1 | 1 | 2 | 2 | 3 | 4 | bords noirs |
| N | 0 | 0 | 0 | 0,5 | 1 | 4 | 7 | bords noirs |
| O | 0 | 0,5 | 1 | 1 | 3 | 5 | 7 | bords noirs |

Les mêmes essais effectués en l'absence de sorbitol conduisent tous à des échantillons noirs au bout de 35 mn de traitement thermique à l'étuve à 180 °C.

## Exemples 16 à 21

On prépare une composition plastifiée (P)

On charge dans un broyeur à bille :

1 000 g d'un PVC en poudre, caractérisé par un indice de viscosité égal à 95 (norme NF T 51 013) obtenu par polymérisation en masse et vendu sous la marque déposée LUCOVYL GB 9 550.

390 g de phtalate de dioctyle
20 g d'huile de soja époxydée
5 g de stéarate de calcium
2,5 g de stéarate de zinc.

On laisse tourner sur rouleaux pendant 15 heures.

Dans des poudriers de 250 ml, contenant quelques billes de porcelaine, on charge :

100 g de la composition ci-dessus et respectivement :

0,12 g de sorbitol (Q)
0,3 g de thioacetylacétate d'éthyle (R)
{ 0,3 g de thioacétylacétate d'éthyle
{ 0,12 g de sorbitol } (S)
0,3 g de thiobenzoyle acétate d'éthyle (T)
0,5 g de thioacétylacétate de cétyle (U)
{ 0,5 g de thioacétylacétate de cétyle
{ 0,12 g de sorbitol (V)

On homogénéise ces mélanges durant 3 mn sur un mélangeur à cylindre à 170 °C et on prépare ainsi des feuilles de 1 mm environ d'épaisseur.

Aux tests de traitement thermique à 180 °C, on obtient les résultats suivants :

| | TEMPS EN MINUTES | | | | | | | | |
|---|---|---|---|---|---|---|---|---|---|
| | 0 | 7 | 15 | 25 | 35 | 45 | 60 | 65 | 100 |
| P | 0,5 | 3 | 3 | 3 | 3 | 4 | noir | | |
| Q | 0,5 | 4 | 7 | 8 | 9 | 9 | 9 | 9 | 10 |
| R | 0 | 0 | 1 | 2 | 3 | 4 | noir | | |
| S | 0 | 0 | 0 | 0,5 | 0,5 | 1 | 4 | 8 | 10 |
| T | 1 | 1 | 2 | 3 | 3 | 5 | noir | | |
| U | 0 | 0 | 1 | 1,5 | 3 | 4 | noir | | |
| V | 0 | 0 | 0 | 0,5 | 1 | 1,5 | 2 | 2 | 7 |

Exemples 22 à 29

On prépare une composition plastifiée (X) comme à l'exemple 16, mais comprenant :

100 g du même PVC
390 g de phtalate de dioctyle
2,5 g de stéarate de zinc
5 g de stéarate de baryum

A 100 g de la composition (X), on ajoute respectivement :

Y 0,5 % de thioacétoacétate de cétyle
Z 0,5 % de thiobenzoylacétate de cétyle
AA 0,1 % de sorbitol
AB {0,1 % de sorbitol / 0,5 % de thioacétoacétate de cétyle}
AC {0,1 % de sorbitol / 0,5 % de thiobenzoylacétate de cétyle}
AD 0,2 % de Mannitol
AE {0,2 % de Mannitol / 0,5 % de thioacétoacétate de cétyle}

Au test de stabilité à 180 °C on obtient les résultats suivants :

| | Durée en minutes | | | | | | | | | |
|---|---|---|---|---|---|---|---|---|---|---|
| | 0 | 5 | 10 | 15 | 21 | 25 | 35 | 45 | 55 | 70 |
| X | 1 | 3 | 5 | 7 | noir | | | | | |
| Y | 0 | 0 | 1 | taches noires | | | | | | |
| Z | 0 | 0 | 2 | noir | | | | | | |
| AA | 1 | 4 | 6 | 6 | 6 | 7 | 8 | taches noires | noir | |
| AB | 0 | 0 | 1 | 1 | 2 | 2 | 3 | noir | | |
| AC | 0 | 0 | 2 | 2 | 2 | 2 | 5 | noir | | |
| AD | 1 | 3 | 6 | 6 | 6 | 6 | 6 | 6 | 7 | brun noir |
| AE | 0 | 0 | 0 | 1 | 1 | 2 | 2 | 2 | 3 | taches noires |

**Revendications**

1. Compositions à base de polymère de chlorure de vinyle stabilisées thermiquement par emploi d'un ou plusieurs sels organiques de calcium, de baryum, de zinc, de cadmium ou de magnésium, éventuellement d'un polyol linéaire ayant au moins quatre fonctions hydroxyles dont au moins une est une fonction alcool primaire, éventuellement d'un composé époxydé comme par exemple l'huile de soja époxydée, caractérisée en ce qu'elles contiennent un ou plusieurs composés organiques de formule générale :

$$R_1 - \underset{\underset{S}{\|}}{C} - CH_2 - \underset{\underset{O}{\|}}{C} - OR_2$$

dans laquelle $R_1$ représente un radical alcoyle ayant de 1 à 36 atomes de carbone ou un radical aryle, dans laquelle $R_2$ représente un radical alcoyle ou alcényle ayant de 1 à 36 atomes de carbone ou un radical aryle, ces radicaux pouvant être substitués par 1 ou plusieurs atomes d'halogène ou des radicaux alkyles ou des groupements hydroxyles, éthéroxydes, alkoxycarbonyles ou des groupements de formule

$$R_1 - \underset{\underset{S\ \text{(ou O)}}{\|}}{C} - CH_2 - \underset{\underset{O}{\|}}{C} - O -$$

ou des groupements azotés.

2. Compositions caractérisées en ce qu'elles contiennent par rapport au poids de polymères de 0,005 à 5 % en poids d'un ou plusieurs composés organiques selon la revendication 1.

3. Compositions selon la revendication 1 dans lesquelles le polymère est un homopolymère de chlorure de vinyle ou copolymère obtenu par copolymérisation de chlorure de vinyle avec l'acétate de vinyle ou le chlorure de vinylidène, la proportion de chlorure de vinyle dans le copolymère étant égale ou supérieure à 50 % en poids.

4. Compositions selon la revendication 1 dans lesquelles le polymère est un copolymère dont la proportion en poids de chlorure de vinyle copolymérisé est supérieure à 80 % en poids.

5. Composition selon l'une des revendications 1 à 3 caractérisées en ce que le composé métallique est l'un des couples de sels d'acides organiques de calcium et de zinc ou de baryum et de zinc.

6. Produits conformés obtenus à partir des compositions selon les revendications 1 à 4.

**Claims**

1. Compositions based on vinyl chloride polymer, heat-stabilised by using one or more organic salts of calcium, barium, zinc, cadmium or magnesium, if appropriate a linear polyol having at least four hydroxyl groups of which at least one is a primary alcohol group, and if appropriate an epoxide compound such as, for example, epoxidised soya oil, characterised in that they contain one or more organic compounds of the general formula :

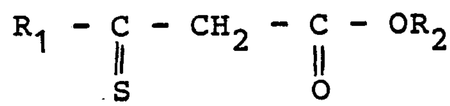

in which $R_1$ represents an alkyl radical having from 1 to 36 carbon atoms or an aryl radical, and in which $R_2$ represents an alkyl or alkenyl radical having from 1 to 36 carbon atoms or an aryl radical, it being possible for these radicals to be substituted by one or more halogen atoms, alkyl radicals, hydroxyl, ether or alkoxycarbonyl groups, groups of the formula

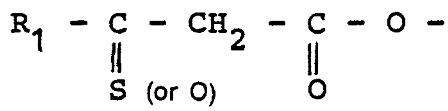

or nitrogen-containing groups.

2. Compositions, characterised in that they contain, relative to the weight of polymer, from 0.005 to 5 % by weight of one or more organic compounds according to Claim 1.

3. Compositions according to Claim 1, in which the polymer is a vinyl chloride homopolymer or a copolymer obtained by copolymerising vinyl chloride with vinyl acetate or vinylidene chloride, the proportion of vinyl chloride in the copolymer being equal to or greater than 50 % by weight.

4. Compositions according to Claim 1, in which the polymer is a copolymer in which the proportion of copolymerised vinyl chloride is greater than 80 % by weight.

5. Compositions according to one of Claims 1 to 3, characterised in that the metal compound is a pair of calcium and zinc salts of organic acids or a pair of barium and zinc salts of organic acids.

6. Shaped products obtained from the compositions according to Claims 1 to 4.

**Ansprüche**

1. Zusammensetzungen auf Basis von Polyvinylchloridpolymeren, welche thermisch stabilisiert sind durch Anwendung eines oder mehrerer organischer Calcium-, Barium-, Zink-, Cadmium- oder Magnesiumsalze, gegebenenfalls eines linearen Polyols mit mindestens vier Hydroxylfunktionen, von denen wenigstens eine eine primäre Alkoholfunktion ist, gegebenenfalls einer Epoxidverbindung wie beispielsweise epoxidiertes Sojaöl, dadurch gekennzeichnet, daß sie eine oder mehrere organische Verbindungen der allgemeinen Formel

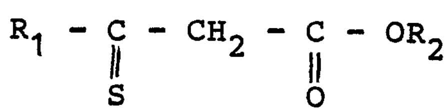

enthalten,

wobei $R_1$ einen Alkylrest mit 1 bis 36 Kohlenstoffatomen oder einen Arylrest bedeutet, worin $R_2$ einen Alkyl- oder Alkenylrest mit 1 bis 36 Kohlenstoffatomen oder einen Arylrest bedeutet, wobei diese Reste substituiert sein können durch ein oder mehrer Halogenatome oder Alkylreste oder Hydroxyl-, verätherte Hydroxyl- oder Alkoxycarbonylgruppen oder Gruppen der Formel

$$R_1 - \underset{\underset{S\ (\text{oder } O)}{\|}}{C} - CH_2 - \underset{\underset{O}{\|}}{C} - O -$$

oder stickstoffhaltige Gruppen.

2. Zusammensetzungen, dadurch gekennzeichnet, daß sie in Bezug auf das Gewicht der Polymeren 0,005 bis 5 Gew.-% eine oder mehrere organische Verbindungen gemäß Anspruch 1 enthalten.

3. Zusammensetzungen gemäß Anspruch 1, worin das Polymere ein Vinylchloridhomopolymeres oder -copolymeres ist, welches durch Copolymerisation von Vinylchlorid mit Vinylacetat oder Vinylidenchlorid erhalten wurde, wobei das Mengenverhältnis von Vinylchlorid in dem Copolymeren gleich oder größer als 50 Gew.-% beträgt.

4. Zusammensetzungen gemäß Anspruch 1, worin das Polymere ein Copolymeres ist, dessen Gewichtsverhältnis an copolymerisiertem Vinylchlorid über 80 Gew.-% beträgt.

5. Zusammensetzung gemäß einem der Ansprüche 1 bis 3, dadurch gekennzeichnet, daß die Metallverbindung eines der Paare von Salzen organischer Säuren von Calcium und Zink oder Barium und Zink ist.

6. Verformte Erzeugnisse, erhalten aus den Zusammensetzungen gemäß den Ansprüchen 1 bis 4.